# EUROPEAN PATENT APPLICATION

(11) **EP 2 876 052 A1**
(43) Date of publication of application: **27.05.2015**
(21) Application number: 13382472.2
(22) Date of filing: 25.11.2013
(51) Int. Cl.: B64D 39/00

(54) **A hose and drogue in-flight refueling system with an active fuel pressure control**

(71) Applicant: EADS Construcciones Aeronauticas S.A., 28906 Getafe (Madrid) (ES)
(72) Inventor: De La Fuente López, Samuel, 28906 Getafe (ES); Martínez Vásquez, Bruno, 28906 Getafe (ES)
(74) Representative: Elzaburu Marquez, Alberto

(57) **Abstract**

The present invention provides a hose and drogue in-flight refueling system that avoids overpressure risks in the refueling operation and optimizes the performance of the fuel supply during its operational life and throughout all the flow rates.

The hose (19) and drogue (21) in-flight refueling system comprises a pressure sensing unit (37) capable of measuring continuously the fuel pressure at the end of the hose (19) and a control unit (41) in the tanker aircraft (13) which is operatively communicated through a communication link with the pressure sensing unit (37) and with the fuel pump (33) and is adapted to use the measures of the fuel pressure at the end of the hose (19) to control that the fuel supplied at the beginning of the hose (19) has the pressure needed to achieve a target pressure at the end of the hose (19).

## Description

### FIELD OF THE INVENTION

The present invention relates to hose&drogue in-flight refueling systems and more in particular to their fuel pressure control means.

### BACKGROUND

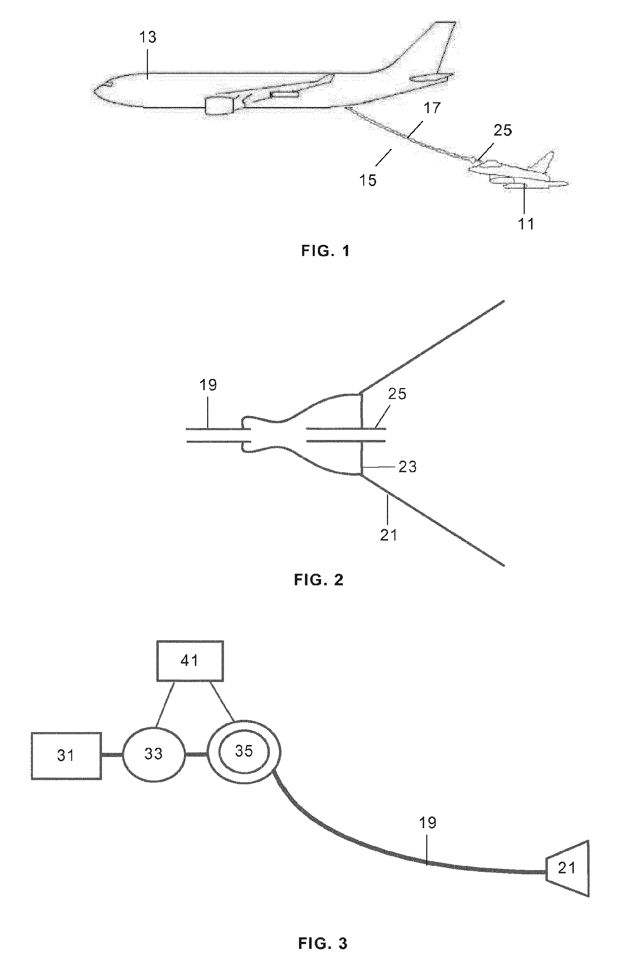

A known system for performing in-flight refueling operations, illustrated in Figures 1, 2, 3, is based on a refueling device 15 allowing fuel to pass from a tanker aircraft 13 to a receiver aircraft 11.

The refueling device 15 comprises a hose&drogue device 17 in the tanker aircraft 13 and a probe 25 in the receiver aircraft 11.

The hose&drogue device 17 comprises a flexible hose 19 that trails from a refueling unit (pod or FRU) located in the tanker aircraft 13, a reception coupling unit 23 at the end of the hose 19 which has a passage for receiving the nozzle of the probe 25, and a drogue 21 which is a fitting resembling a windsock or shuttlecock that is used to stabilise the hose 19 trailing from the tanker aircraft 13 and to provide the drag to maintain the hose catenary and the mating force with the probe 25.

The hose&drogue device 17 is extended/retracted from/to a drum device 35 that includes a winding drum for extending/retracting the hose 19 and a motor to actuate the winding drum. When not in use the hose 19 is reeled completely into the winding drum.

The probe 25 is a rigid arm placed on the receiver aircraft's nose or fuselage with a valve that is closed until it mates with the reception coupling unit 23 and is opened to allow fuel to pass from the tanker aircraft 13 to the receiver aircraft 11.

The fuel is pumped out from a fuel tank 31 to the hose 19 by means of a fuel pump 33.

A control unit 41 operatively connected with the fuel pump 33 and the drum device 35 manages the extension/retraction of the hose&drogue device 17 and the supply of fuel to the hose 19.

During the refueling operation, the fuel shall be supplied at a regulated pressure at the end of the hose 19 when is connected to the probe 25 of, for example, 50 +/-5 psig in order to prevent over-pressurization of the receiver aircraft 11 and optimize the refueling time by maximizing the performances of the refueling system.

In the prior art, the control of a fuel over-pressure in the hose&drogue device 17 during a refueling operation is carried out by means of pressure regulator valves included in the reception coupling unit 23. A pressure regulator valve arrangement for restricting the fuel passage of a refueling device in an event of over-pressure is described in WO 2008/145970.

In particular the commonly used reception couplings units type MA-3 and MA-4 have pressure regulator valves to restrict the fuel supply when the pressure in the reception coupling unit 23 is higher than 50 psig.

A disadvantage of the pressure regulator valves is that they are passive control means that need to be set at a fixed nominal value (typically 50+/- 5 psig) limiting the performance of the system. Therefore, the fuel pressure cannot be controlled to a lower value. Some receiver aircrafts, especially helicopters, may require lower delivery pressures that cannot be controlled by this means.

Another disadvantage is that they do not work properly at certain flow rates, especially low flow rates.

Another disadvantage is that a failure in a pressure regulator valve cannot be detected and can lead to potential damages of the receiver lines due to over-pressure.

It is also known in the art regulating the fuel pressure by estimating the pressure losses through the installation and controlling the pressure at the outlet of the fuel pump 33. This method has the drawback of using a fixed pressure losses estimation, which is set at the beginning of the design of the system and cannot be accurate with the actual losses of the system so that the real pressure at the outlet of the fuel pump 33 can be higher or lower than the required pressure. Any overestimation of the pressure losses might lead to a delivered pressure higher than the nominal value. On the other hand, any underestimation of the pressure losses leads to a delivery pressure lower than the nominal, reducing therefore the performances of the refueling system.

### SUMMARY OF THE INVENTION

It is an object of the present invention to provide a hose&drogue in-flight refueling system that avoids the risk of an over-pressure event in a refueling operation and is capable of optimizing the performance of the fuel supply during its operational life and throughout all the flow rates.

This and another objects are met by a hose&drogue in-flight refueling system that, in addition to its conventional components, comprises a pressure sensing unit capable of measuring continuously the fuel pressure at the end of the hose and a control unit in the tanker aircraft operatively communicated with the pressure sensing unit and with the fuel pump and adapted to use the measures of the fuel pressure at the end of the hose to control that the fuel supplied at the beginning of the hose has the pressure needed to achieve a target pressure at the end of the hose.

The pressure of the fuel delivered to the receiver aircraft is therefore controlled continuously at its delivery point and kept within the required margins.

In an embodiment the control unit is also operatively communicated with the drum device such that the pressure measured at the end of the hose can be used as an additional input to manage the operation of the drum device.

The drum device can therefore be immediately actuated in events such a drop pressure that require the retraction of the hose&drogue device for avoiding whipping effects.

Other desirable features and advantages of the invention will become apparent from the subsequent detailed description of the invention and the appended claims, in relation with the enclosed drawings.

### BRIEF DESCRIPTION OF DRAWINGS

Figure 1 is a schematic view of a refueling operation between a tanker aircraft and a receiver aircraft using a hose&drogue device.
Figure 2 is a sketch illustrating the reception coupling unit used for connecting the hose&drogue device of a tanker aircraft with the probe of a receiver aircraft.
Figure 3 is a block diagram of the fuel pressure control performed in a prior art hose&drogue in-flight refueling system.
Figure 4 is a sketch illustrating the extension of the hose&drogue device.
Figure 5 is a sketch illustrating of the retraction of the hose&drogue device immediately after the connection with the probe of the receiver aircraft.
Figure 6 is a block diagram of the fuel pressure control performed in the hose&drogue in-flight refueling system of the invention.

### DETAILED DESCRIPTION OF THE INVENTION

A typical refueling operation is performed in the following phases.

### Phase 1: Hose extension

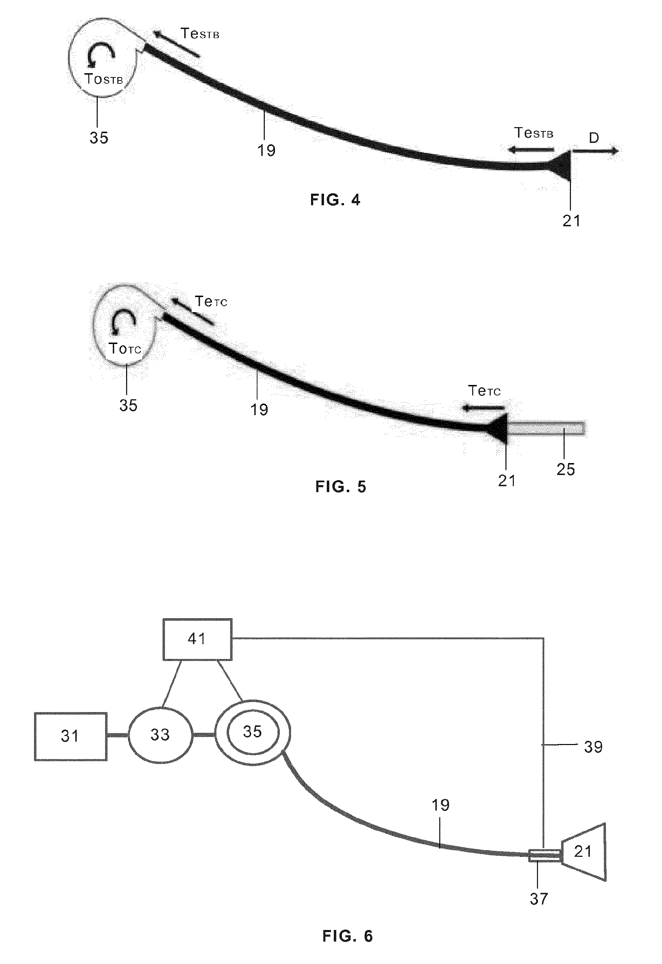

To extend the hose 19, the drogue 21 is released into the airstream and the drag D (see Figure 4) extends the hose 19. The control unit 41 is in charge of maintaining a constant extension speed of the hose 19 by controlling the drum device 35.

### Phase 2: Receiver connection

Once the drogue 21 is flying in the airstream, the receiver aircraft 11 has to maneuver to make the contact. In certain flight conditions (such as turbulence) the drogue 21 might be not stable so it creates an extra effort to the receiver pilot for the contact. In some occasions, missed contacts occur due to this drogue instability, with potential damages to both the receiver aircraft 11 and the hose&drogue device 17. Known refueling systems do not warn the receiver aircraft 11 whether the conditions for the contact are suitable or not.

When the probe 25 of the receiver aircraft 11 makes contact with the hose&drogue device 17, the drag D is suddenly absorbed by the receiver aircraft 11 and it continues pushing the hose&drogue device 17. That displacement creates a rotational movement to the winding drum, which is detected by the control unit 41. After the detection of the contact the control unit 41 commands the application of a torque To_{TC} to the drum device 35 for rewinding the hose&drogue device 17. A tension Te_{TC} is, then, transmitted to the hose&drogue device 17 (see Fig. 5).

In known refueling systems there is always a reaction time between the probe 25 of the receiver aircraft 11 makes contact with the hose&drogue device 17 and the drum device 35 reacts rewinding a portion of the hose&drogue device 17. In some cases, this delay creates a wave that might travel upwards and downwards again, leading to whipping effects over the receiver aircraft 11 or the tanker aircraft 13.

### Phase 3: Receiver in contact

When the probe 25 of the receiver aircraft 11 is in contact with the hose&drogue device 17 the system keeps the torque To_{TC} to allow a calculated tension control Te_{TC}.

Since the tension of the hose 19 is controlled indirectly by a pre-defined drum torque To_{TC} variations of friction in the system throughout the service life might modify the actual tension of the hose and create unexpected disconnections (if Te_{TC} is greater than expected) or hose "sag" during the contact (if Te_{TC} is lower than expected).

The fuel can be supplied in this phase to the receiver aircraft 11 by the fuel supply means of the tanker aircraft 13 (fuel tank 31, fuel pump 33) at a nominal level (typically 50 +/-5 psig for airplanes and around 30 psig for helicopters).

As said in the Background the pressure regulation can be achieved by means of pressure regulators valves included in the reception coupling unit 23. The fuel supply control means may also take into account a predefined pressure losses curve of the fuel system and an estimated recovery pressure due to the hose catenary.

### Phase 4: Disconnection and return to ready for contact position

When the probe 25 of the receiver aircraft 11 is to disconnect, it pulls back the hose&drogue device 17 which is trailed in a controlled way following the receiver movement. If the hose&drogue device 17 is accelerated too fast or reaches the full trailed position, the system applies brakes and the receiver aircraft 11 disengages.

### Phase 5: Hose retraction

When the refueling operation is finished, the hose&drogue device 17 is retracted. Usually, the hose&drogue device 17 is retracted by keeping a constant rotational speed of the drum.

The hose&drogue in-flight refueling system of the invention comprises (see Figure 6):
- A pressure sensing unit 37 capable of measuring the pressure of the fuel at the end of the hose 19. Pressure transducers can be used as pressure sensing means.
- A control unit 41 in the tanker aircraft 13 operatively communicated through a communication link 39 with the pressure sensing unit 37 (in addition to being operatively communicated with the fuel pump 33 and the drum device 35) and adapted to use the fuel pressure measured at the end of the hose 19 to control that the fuel supplied at the beginning of hose 19 has the pressure needed to achieve a target pressure at the end of the hose 19.

In an embodiment the pressure sensing unit 37, comprising pressure transducers and an associated conditioning electronic unit, is incorporated to the drogue 21. The pressure sensing unit 37 can receive power from power generation means located in the drogue 21 or from the tanker aircraft 13 thought isolated wires integrated on the hose 19.

The communication link 39 between the pressure sensing unit 37 and the control unit 41 to transmit a conditioned signal with the measures of the fuel pressure at the end of the hose 19 can be a wireless link or a wired link by means of electrical wires or optical fiber wires embedded in the hose 19.

In an embodiment of the invention, the control unit 41 is also adapted to the use the fuel pressure measured at the end of the hose 19 to manage the operation of the drum device 35.

This embodiment is particularly useful in Phase 2: Receiver connection when the fuel pressure falls as the fuel start to move. In that case the pressure sensing unit 37 detects the pressure drop and the control unit 41 uses this information to manage the drum device 35 to retract the hose&drogue device 17 in order to eliminate the whipping effects mentioned in said Phase.

An advantage of the invention is that the pressure at the end of the hose 19 is actively controlled. It is therefore possible to deliver fuel at a nominal level pressure or lower values than the nominal, within the required margins, depending in the actual pressure losses of the fuel supply system of the tanker aircraft and its variation along the time. This reduces the risk of overpressure on the receiver aircraft 11 and assures nominal performances of the refueling system throughout its operational life.

Another advantage of the invention is that the regulation of the fuel pressure does not depend on the correct working of the pressure regulators valves in the reception coupling unit 23 which might have latent failures whose prevention requires a costly maintenance. However the active regulation of the fuel pressure of the invention is compatible with hose&drogue devices 17 provided with pressure regulators valves.

Another advantage is that the measure of the fuel pressure at the end of the hose 19 provides an indirect signal about the position of the coupling poppet and therefore if there is a contact between the hose&drogue device 17 of the tanker aircraft 13 and the probe 25 of the receiver aircraft 11.

Although the present invention has been described in connection with various embodiments, it will be appreciated from the specification that various combinations of elements, variations or improvements therein may be made, and are within the scope of the invention.

## Claims

1. An in-flight refueling system comprising a tanker aircraft (13), a receiver aircraft (11) and a refueling device (15);
the refueling device (15) comprising a hose&drogue device (17) for delivering fuel, extendable/retractable from/to the tanker aircraft (13) by means of a drum device (35), and a probe (25), extendable/retractable from/to the receiver aircraft (11) for receiving fuel;
the hose&drogue device (17) comprising a hose (19), a reception coupling unit (23) at the end of the hose (19) and a drogue (21) attached to the reception coupling unit (23);
the tanker aircraft (13) comprising fuel supply means including a fuel tank (31) and a fuel pump (33) connected to the fuel tank (31) to regulate the pressure of the fuel delivered to the hose (19);
**characterized in that** further comprises:
a pressure sensing unit (37) capable of measuring continuously the fuel pressure at the end of the hose (19);
a control unit (41) in the tanker aircraft (13) operatively communicated with the pressure sensing unit (37) and with the fuel pump (33) and adapted to use the measures of the fuel pressure at the end of the hose (19) to control that the fuel supplied at the beginning of the hose (19) has the pressure needed to achieve a target pressure at the end of the hose (19).

2. An in-flight refueling system according to claim 1, wherein the control unit (41) is also operatively communicated with the drum device (35) and adapted to use the measures of the fuel pressure at the end of the hose (19) as an additional input to manage the operation of the drum device (35).

3. An in-flight refueling system according to any of claims 1-2, wherein the pressure sensing unit (37) comprises pressure transducers and an electronic unit adapted for generating a pressure measure signal.

4. An in-flight refueling system according to any of claims 1-3, wherein the control unit (41) is operatively communicated with the pressure sensing unit (37) through a wireless communication link.

5. An in-flight refueling system according to any of claims 1-3, wherein the control unit (41) is operatively communicated with the pressure sensing unit (37) through a wired communication link that include electrical wires embedded in the hose (19).

6. An in-flight refueling system according to any of claims 1-3, wherein the control unit (41) is operatively communicated with the pressure sensing unit (37) through a wired communication link that include optical fiber wires embedded in the hose (19).
